(19) Europäisches Patentamt
European Patent Office
Office européen des brevets

(11) **EP 4 703 710 A1**

(12) **EUROPEAN PATENT APPLICATION**

(43) Date of publication:
04.03.2026 Bulletin 2026/10

(51) International Patent Classification (IPC):
**G01N 21/3518** (2014.01)  **G01J 3/42** (2006.01)
**G01N 21/03** (2006.01)  **G01N 21/31** (2006.01)

(21) Application number: 25191913.0

(22) Date of filing: 25.07.2025

(52) Cooperative Patent Classification (CPC):
**G01N 21/3518; G01J 3/42;** G01N 21/031;
G01N 2021/3174; G01N 2021/3527;
G01N 2201/0686

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 29.08.2024 JP 2024147576
10.12.2024 JP 2024215931

(71) Applicant: **Fuji Electric Co., Ltd.**
**Kawasaki-shi, Kanagawa 210-9530 (JP)**

(72) Inventors:
• **TANIGUCHI, Yu**
**Kawasaki-shi, Kanagawa 210-9530 (JP)**
• **TAKEDA, Naoki**
**Kawasaki-shi, Kanagawa 210-9530 (JP)**
• **YOSHIMINE, Ikumi**
**Kawasaki-shi, Kanagawa 210-9530 (JP)**
• **TABARU, Masaya**
**Kawasaki-shi, Kanagawa 210-9530 (JP)**

(74) Representative: **Appelt, Christian W.**
**Boehmert & Boehmert**
**Anwaltspartnerschaft mbB**
**Pettenkoferstrasse 22**
**80336 München (DE)**

(54) **GAS CORRELATION FILTER WHEEL AND GAS ANALYZER**

(57)  A gas analyzer (1) for measuring a concentration of a plurality of target gases included in a sample gas (G) includes a light source (10) to emit an infrared ray (L), gas filters including target gas filters (22), each sealed with a different one of the target gases that absorbs the infrared ray, and reference gas filters (23) sealed with a reference gas that transmits the infrared ray and does not absorb the infrared ray, a light shielding mask (24) provided outside the gas filters, including regions, each of the regions corresponding to a respective one of the gas filters, and each of the regions having openings (241) to transmit the infrared ray, a gas correlation filter wheel (20) to house the target gas filters (22) and the reference gas filters (23), and a sample gas cell (40) to receive the infrared ray transmitted through the gas filter, and to have the sample gas (G) including the target gases inside.

FIG.3

# FIG.4

**Description**

CROSS-REFERENCE TO RELATED APPLICATIONS

The present application is based on and claims priority to Japanese patent application No. 2024-147576 filed on August 29, 2024, and Japanese patent application No. 2024-215931 filed on December 10, 2024, with the Japan Patent Office. The entire contents of these patent applications are hereby incorporated by reference.

BACKGROUND OF THE INVENTION

1. Field of the Invention

The disclosures herein relate to gas correlation filter wheels and gas analyzers.

2. Description of the Related Art

A gas analyzer that analyzes a target gas component by irradiating a gas with a broadband infrared ray is known. Patent Literature (PTL) 1 discloses a technology to drive and rotate a gas correlation cell and a chopper in which a pair of light transmitting parts and a plurality of light shielding parts are formed synchronized with an input pulse, and to measure a concentration of carbon monoxide or the like based on a detected light intensity. PTL 2 discloses a technology to analyze a specific gas component by irradiating a measuring cell with an infrared ray through a correlation filter using a light shielding plate or an optical filter for simplified correction.

The gas analyzer of the gas filter correlation method measures the concentration of the target gas by irradiating a ray of a specific wavelength absorbed by the target gas and measuring attenuation (amplitude ratio of the detected waveform) from the light detection signal. It is known that an absorption intensity of the gas follows the Beer-Lambert law, and a ratio of a quantity of light correlates with the gas concentration.

The gas filter correlation method (GFC) is known as a measuring method that eliminates effects of an interference gas and optical noise, except for electric noise, by alternately detecting a highly concentrated target gas and a reference gas (zero gas), and calculating their difference.

PTL 3 discloses a gas filter cell portion for a single component of the gas analyzer of the gas filter correlation method.

PTL 3 discloses a method of forming a gas cell by directly sealing a gas in a rotating gas cell structure. In a case of a single component meter, even when applying the gas filter correlation method, two types of gases, namely the target gas and the reference gas, need to be sealed. Therefore, there are two sealing openings.

CITATION LIST

PATENT LITERATURES

[PTL 1] Japanese Laid-Open Patent Publication No. H8-184562
[PTL 2] Japanese Laid-Open Patent Publication No. H10-82740
[PTL 3] Japanese Patent No. S55-007178

SUMMARY OF THE INVENTION

PROBLEM TO BE SOLVED BY THE INVENTION

All technologies disclosed in PTL 1 to 3 measure a single gas component. In the gas analyzer described in PTL 1 to 3, when designing a multicomponent meter, it is required to seal two types of gases, namely, the target gas and the reference gas, for each target gas. This leads to significant space constraints. In addition, there is a risk that the structure becomes complicated and a wheel itself needs to be rebuilt if sealing of even one type of gas fails.

There may be a need for an embodiment of the present disclosure to provide a gas correlation filter wheel and a gas analyzer capable of stably measuring a plurality of gas components contained in a sample gas.

MEANS FOR SOLVING PROBLEM

A gas analyzer for measuring a concentration of a plurality of target gases included in a sample gas includes a light source configured to emit an infrared ray, a plurality of gas filters including a plurality of target gas filters, each sealed with a different one of the target gases that absorbs the infrared ray, and one or more reference gas filters sealed with a reference gas that transmits the infrared ray and does not absorb the infrared ray, a light shielding mask provided outside the gas filters, including a plurality of regions, each of the regions corresponding to a respective one of the plurality of gas filters, and each of the regions having a plurality of openings configured to transmit the infrared ray, a gas correlation filter wheel rotatably provided and configured to house the plurality of target gas filters and the one or more reference gas filters, and a sample gas cell configured to receive the infrared ray transmitted through one of the gas filters including the target gas filters and the one or more reference gas filters, and configured to have the sample gas including the target gases inside.

EFFECTS OF THE INVENTION

According to the embodiment of the present disclosure, it is possible to provide a gas correlation filter wheel and a gas analysis device capable of stably measuring a plurality of gas components contained in a sample gas.

BRIEF DESCRIPTION OF THE DRAWINGS

FIG. 1 is an overall configuration diagram of a gas analyzer according to the present embodiment;
FIG. 2 is a plan view illustrating an example of a wheel in a gas correlation filter wheel of the gas analyzer according to the present embodiment;
FIG. 3 is a plan view illustrating an example of the wheel in the gas correlation filter wheel of the gas analyzer according to the present embodiment;
FIG. 4 is a cross-sectional view of the gas correlation filter wheel of FIGS. 2 and 3;
FIG. 5 is a plan view illustrating an example of the wheel in the gas correlation filter wheel of the gas analyzer according to the present embodiment;
FIG. 6 is a cross-sectional view illustrating a IV-IV' cross section of the gas correlation filter wheel of FIG. 5;
FIG. 7 is a drawing illustrating an example of a combination of gas correlation filters in the gas correlation filter wheel according to the present embodiment;
FIG. 8 is a plan view illustrating a modification of the gas correlation filter wheel of the gas analyzer according to the present embodiment;
FIG. 9 is a configuration diagram of a signal processor of the gas analyzer according to the present embodiment;
FIG. 10 is a drawing illustrating a schematic configuration of a detection and sample-and-hold circuit of the gas analyzer according to the present embodiment;
FIG. 11A is a drawing illustrating an example of a light detection signal in the gas analyzer according to the present embodiment;
FIG. 11B is a drawing illustrating an example of the light detection signal in the gas analyzer according to the present embodiment;
FIG. 12 is a drawing illustrating an example of a circuit configuration of the detection and sample-and-hold circuit in the gas analyzer according to the present embodiment;
FIG. 13A is a drawing illustrating an example of a result of processing the light detection signal in the gas analyzer according to the present embodiment;
FIG. 13B is a drawing illustrating an example of the result of processing the light detection signal in the gas analyzer according to the present embodiment; and
FIG. 13C is a drawing illustrating an example of the result of processing the light detection signal in the gas analyzer according to the present embodiment.

DESCRIPTION OF THE PREFERRED EMBODIMENTS

In the following, embodiments of the present invention will be described with reference to the accompanying drawings. In the drawings, the same constituent elements are denoted with the same reference numerals, and redundant description thereabout may be omitted.
The gas analyzer of the gas filter correlation method (GFC) transmits and detects an infrared ray of a specific wavelength absorbed by the target gas. The concentration of the target gas is measured by measuring an amplitude ratio of a waveform of the detected infrared ray as attenuation of the infrared ray. The gas analyzer of the gas filter correlation method houses a gas filter in which a high-purity target gas is sealed and a gas filter in which a reference gas that does not absorb the infrared ray is sealed. The gas filter wheel that rotates the gas filter alternately transmits the infrared ray to each gas filter. Therefore, it is not readily affected by optical noise such as fluctuation in the quantity of light of the transmitted infrared ray and interference by moisture contained in the sample gas, a non-target gas, and the like.

The gas analyzer as described above includes a gas-filter pair. One gas filter is sealed with a high-purity target gas, and the other gas filter is sealed with a reference gas that does not absorb infrared rays. When the concentration of the target gas is measured by combining an infrared light source that emits light at a broad wavelength and a light receiving element that has sensitivity to a broad wavelength, a variation in the quantity of light absorbed by the target gas is extremely small. Therefore, an optical filter that transmits only an infrared ray having a wavelength band required for measuring the concentration of the target gas is used.

In a case of measuring the concentration of one type of target gas, it is sufficient to transmit only the infrared ray of the required wavelength band at any position on a path of the infrared ray.

In the case of measuring the concentration of one type of target gas, the signal/noise ratio (S/N ratio) can be ensured by optimizing light-emission and light-reception wavelength bands of the light source. However, in the case of measuring the concentration of more than one type of target gas, since the light-emission and light-reception wavelength bands of the light source are wide, there is a problem that the signal variation width due to the absorption of the target gas is relatively small and cannot be measured.

In the case of measuring the concentration of a plurality of types of target gas, it is desirable to attach an optical filter to the gas filter. If the optical filter is simply attached to the gas filter, the quantity of light can be measured only once every time the gas correlation filter wheel is rotated. Therefore, data for measuring the concentration of the target gas is reduced.

Furthermore, a low-noise and inexpensive AC motor is used as a driver for rotating the gas correlation filter wheel. When a commercial power supply is used, a rotational speed of the gas correlation filter wheel is about 1500 rpm to 1800 rpm. In this case, the quantity of light is measured approximately 25 to 30 times per second. Therefore, there are few data for measuring the concentration of the target gas, and it is difficult to stably measure the concentration of the target gas.

Therefore, the gas analyzer 1 according to the following embodiment has been found to solve such problems.

According to the gas correlation filter wheel of the present embodiment, the gas correlation filter wheel has a plurality of gas correlation filter sets respectively corresponding to a plurality of target gases, and each gas filter in each gas correlation filter set has an optical filter capable of selectively transmitting wavelengths of the infrared ray that are same wavelengths as those absorbed by the corresponding target gas, so that the signal variation input to the light receiving part in the gas correlation analysis can be easily detected and sensitivity can be improved. Therefore, a plurality of gas components contained in a sample gas can be stably measured.

[EMBODIMENT]

<OVERALL CONFIGURATION OF GAS ANALYZER 1>

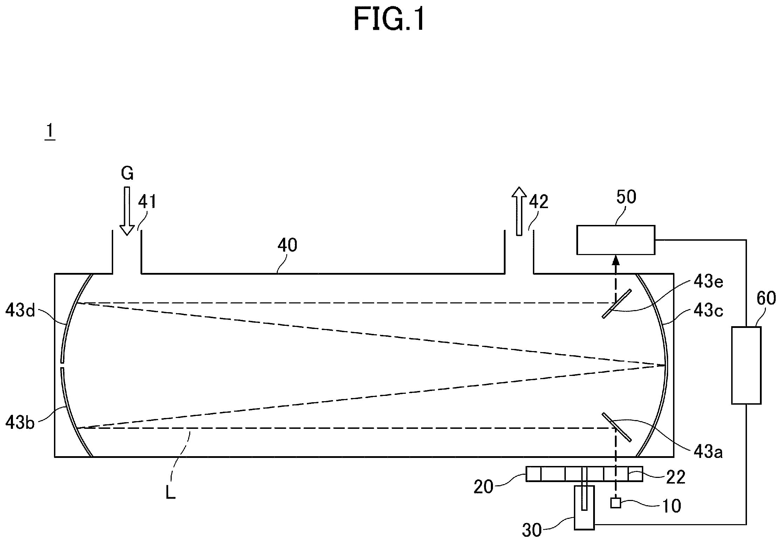

FIG. 1 is an overall configuration diagram of a gas analyzer 1 according to the present embodiment, including a gas correlation filter wheel 20.

As shown in FIG. 1, the gas analyzer 1 of the present embodiment detects the concentration of the target gas or presence or absence of the target gas in the sample gas G in the sample gas cell 40. Specifically, the gas analyzer 1 can measure the concentration of the plurality of target gases contained in the sample gas G, respectively. The gas analyzer 1 can detect the absence of the target gas if the gas concentration is zero or less than a predetermined value, and can also detect the presence or absence of the target gas.

The gas analyzer 1 of the present embodiment includes a light source 10, a gas correlation filter wheel 20, a rotating unit 30, a sample gas cell 40, and a light receiving part 50. The gas analyzer 1 may further include a signal processor 60 connected to the light receiving part 50. In FIG. 1, thick arrows in the sample gas cell 40 indicate a path of the sample gas G, a dashed arrow indicates a path of an infrared ray L, and an arrow from the light receiving part 50 to the signal processor 60 indicates a path of an electric signal.

The light source 10 is a light source that emits the infrared ray L. The light source 10 may be a light source derived from a heat source such as a silicon nitride heater having a black body temperature of approximately 1000°C, for example. An optical component such as a lens or a parabolic mirror (not shown) may be provided in order to make the emitted infrared rays L nearly parallel. An aperture may also be provided in order to limit a half power angle of the light source 10.

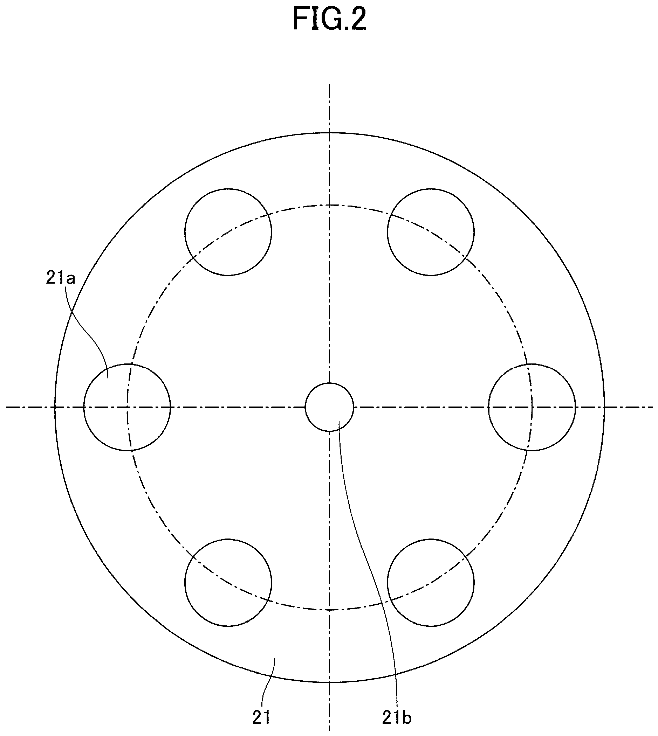

The gas correlation filter wheel 20 will be described in detail with reference to FIGS. 2 to 6.

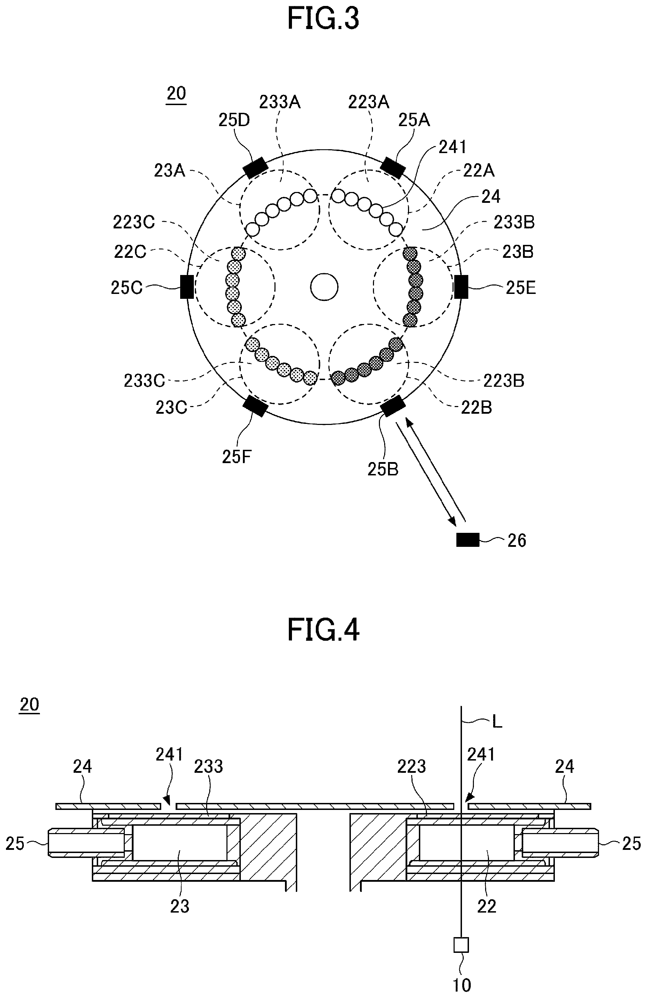

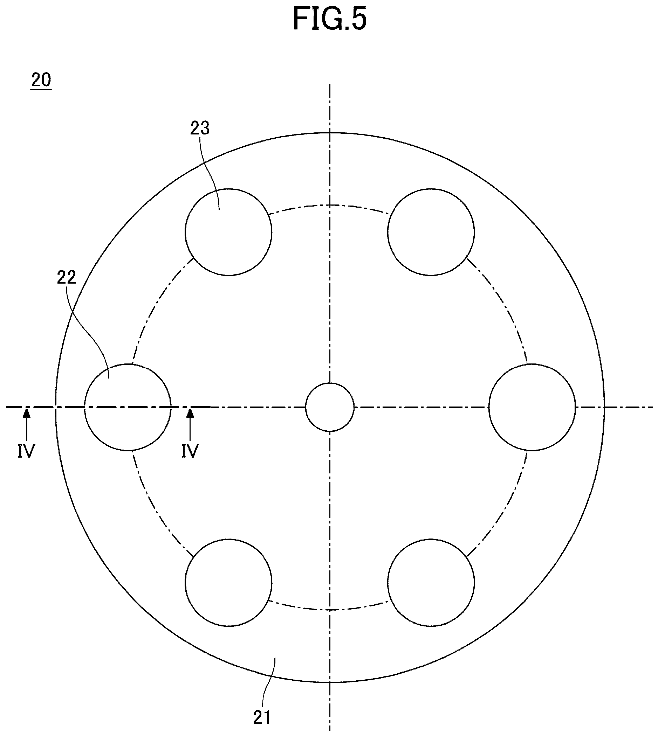

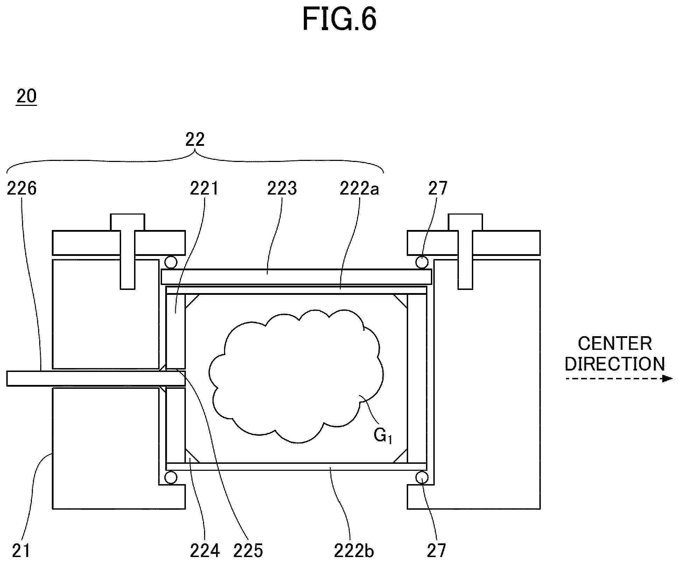

FIGS. 2 and 3 are plan views illustrating an example of a wheel in a gas correlation filter wheel 20 of the gas analyzer according to the present embodiment. FIG. 4 is a cross-sectional view of the gas correlation filter wheel 20 of FIGS. 2 and 3. FIG. 5 is a plan view illustrating an example of the wheel in the gas correlation filter wheel 20 of the gas analyzer according to the present embodiment. FIG. 6 is a cross-sectional view illustrating a IV-IV' cross section of the gas correlation filter wheel 20 of the gas analyzer illustrated in FIG. 5.

The gas correlation filter wheel 20 has a wheel 21 and a plurality of gas filters (22, 23) housed in the wheel 21. The wheel 21 has a circular shape in top view as shown in FIG. 2. The wheel 21 has a plurality of slits 21a for housing a plurality of gas filters (22, 23) along a circumference of a circle concentric with the wheel 21, and a rotary bearing 21b at the center of the wheel 21 so that the wheel 21 is rotatable.

The gas correlation filter wheel 20 can house a plurality of gas filters (22, 23) in a plurality of slits 21a in the wheel 21 as shown in FIGS. 2 to 6.

As shown in FIG. 3, the gas correlation filter wheel 20 houses six gas filters 22A to 23C. Optical filters 223A to 233C are respectively attached to the six gas filters 22A to 23C. The light shielding mask 24 is attached outside the gas filters 22A to 23C. Further, as shown, position detectors 25A to 25F are provided at positions corresponding to the gas filters 22A to 23C on an outer periphery of the gas correlation filter wheel 20. An optical sensor 26 for receiving infrared rays L from the position detectors 25A to 25F may be provided. The number of the gas filters 22A to 23C is not limited to six, and any even number may be provided.

In the following, when the gas filters 22A to 23C do not need to be described separately, they are simply referred to as "gas filters 22 and 23". When the optical filters 223A to 233C do not need to be described separately, they are simply referred to as "optical filters 223 and 233". Further, when the position detectors 25A to 25F do not need to be described separately, they are simply referred to as "position detector 25".

The gas correlation filter wheel 20 houses gas filters 22 and 23. The housed gas filters 22 and 23 may contain at least one target gas filter 22 in which a target gas is sealed, and a plurality of reference gas filters 23 each sealing the reference gas.

In the gas analyzer 1 according to the present embodiment, a plurality of pairs of the reference gas filter and the target gas filter are formed and housed in the gas correlation filter wheel 20, and the gas correlation filter wheel 20 is rotatably mounted. The gas filters for target gas are referred to as gas filters 22A, 22B and, 22C in the figure, and the gas filters for reference gas are referred to as gas filters 23A, 23B, and 23C in the figure.

The target gas filter 22 will be described as a representative example for each gas filter of the gas correlation filter wheel 20. The reference gas filter 23 may have the same configuration except that the gases to be sealed are different. As shown in FIGS. 5 to 6, each gas filter has a gas filter housing 221, a pair of light transmitting windows 222 (222a, 222b) for sealing each end of the housing 221, and an optical filter 223 on the light transmitting window 222a in the light incident direction. Each gas filter further has, if necessary, an adhesive 224 for bonding the light transmitting window 222 to the housing 221, an inlet hole 225 provided on a lateral surface of the housing 221, and capable of introducing the gas $G_1$ into the housing 221, and a pipe 226 for pressure bonding or adhesively sealing the inlet hole 225. Each gas filter can be independently manufactured for each gas type.

The housing 221 of the gas filter is not particularly limited as long as it is tubular, but is preferably cylindrical or polygonal. Each end of the housing 221 has a surface for arranging the light transmitting window 222. The light transmitting window 222 can be attached to each end of the housing 221 with a suitable adhesive (e.g., epoxy adhesive), and can be assembled so that a gas does not leak from a connecting portion.

In one embodiment, for introducing and sealing a gas into each gas filter, the lateral surface of the housing 221 is preferably provided with an inlet hole 225 provided on a lateral surface of the housing 221, and capable of introducing the gas into the housing 221, and a pipe 226 inserted into the inlet hole 225, which can be pressure-bonded or adhesively sealed. The pipe 226 can be attached to the inlet hole 225 with a suitable adhesive (e.g., epoxy adhesive), and can be assembled so that gas does not leak from the connecting portion. In addition, because the pipe 226 can be pressure-bonded or adhesively sealed, the pipe 226 can be pressure-bonded or adhesively sealed by a suitable method, such as welding, after the gas is sealed, and thus the gas can be sealed.

The light transmitting window 222 transmits light in a wavelength band including the wavelengths absorbed by the target gas, and in the infrared region, for example, calcium fluoride ($CaF_2$), quartz ($SiO_2$), germanium, or the like can be used.

The gas correlation filter wheel of the present embodiment has a plurality of combinations of a target gas filter 22 and a reference gas filter 23, and thus gas analysis of a plurality of components is possible. For one target gas component, the gas correlation filter is one combination of a total of two gas filters, a gas filter sealing a target gas and a gas filter sealing a reference gas. In the combination of the gas correlation filters, an optical filter capable of selectively transmitting the wavelengths of the infrared ray L that are same wavelengths as those absorbed by the corresponding target gas is installed as an optical filter.

Specifically, in the case of a gas correlation filter wheel capable of analyzing a gas of two or more components, it has at least a first gas correlation filter set (A) below and a second gas correlation filter set (B) below.

(A) The first gas correlation filter set having a first target gas filter 22A, a reference gas filter 23A, and a first optical filter (223A, 233A) capable of selectively transmitting the wavelengths of the infrared ray L that are same wavelengths as those absorbed by the first target gas as an optical filter.

(B) The second gas correlation filter set having a second target gas filter 22B, a reference gas filter 23B, and a second optical filter (223B, 233B) capable of selectively transmitting the wavelengths of the infrared ray L that are same wavelengths as those absorbed by the second target gas as an optical filter.

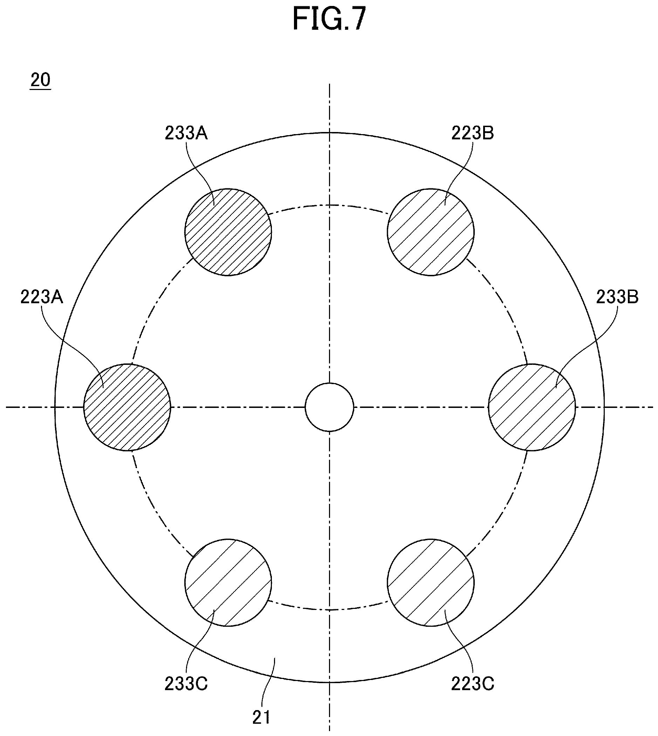

As shown in FIG. 7, in the case of a gas correlation filter wheel capable of analyzing a gas of three components, it has the first gas correlation filter set (A) above, the second gas correlation filter set (B) above, and a third gas correlation filter set (C) below.

(C) The third gas correlation filter set having a third target gas filter 22C, a reference gas filter 23C, and a third optical filter (223C, 233C) capable of selectively transmitting the wavelengths of the infrared ray L that are same wavelengths as those absorbed by the third target gas as an optical filter.

The reference target gas sealed in the gas filters 23A, 23B, and 23C is, for example, nitrogen ($N_2$), but is not limited to $N_2$, and may be any inert gas such as argon (Ar) that has no absorption in the infrared absorption region including the wavelengths absorbed by the target gas that does not absorb an infrared ray. The reference gases to be compared in the reference gas filters of the plurality of gas correlation filter sets may be the same or different from each other. When the infrared ray L emitted from the light source 10 enters the gas filter 23, a part of the infrared ray L is absorbed by the gas components sealed in the gas filter 23. In the following description, the reference gas to be compared is $N_2$.

The target gas can be selected appropriately according to a purpose, and for example, gases such as carbon monoxide, carbon dioxide, methane, propane, ammonia, and nitrous oxide can be selected. According to the gas correlation filter wheel and the gas analyzer of the present embodiment, a plurality of types of gas can be easily measured.

Each of the gas filters 22A, 22B, and 22C seals a different target gas. Therefore, the gas analyzer 1 according to the present embodiment can measure the concentration of the gas of three different components. The target gas sealed in the gas filters 22A, 22B, and 22C is a highly concentrated gas. Examples of the target gas include, but are not limited to, CO, $CO_2$, and $CH_4$. The high concentration is preferably such that most of the light of the wavelength absorbed by the gas component sealed in the gas filter 22 is absorbed. In the following description, the target gases are CO, $CO_2$, and $CH_4$.

When a plurality of target gases are measured, there is a problem that the signal variation width due to the absorption of the target gas is relatively small because the light emission wavelength band and the light reception wavelength band of the light source are wide, and the measurement cannot be performed. However, by applying each optical filter capable of selectively transmitting the wavelengths of the infrared ray that are same wavelengths as those absorbed by a specific target gas, the signal variation can be easily detected (sensitivity can be improved) by preventing the light of an unnecessary wavelength band from entering. Therefore, the gas correlation filter wheel 20 of the present embodiment has a plurality of gas correlation filter sets corresponding to the plurality of target gases, and each gas filter in each gas correlation filter set has an optical filter capable of selectively transmitting the absorption wavelength of a specific target gas, so that the signal variation input to the light receiving part in the gas correlation analysis can be easily detected and the sensitivity can be improved. Therefore, a plurality of gas components contained in the sample gas can be stably measured.

A type of gas to be analyzed can be suitably selected according to the purpose, and the desired gas correlation filter wheel 20 can be manufactured by suitably adjusting the size of the wheel 21 of the corresponding gas correlation filter wheel 20 and the number and arrangement of a plurality of gas filters (22, 23).

According to the type and number of target gases, a plurality of gas filters having a desired gas correlation filter set are manufactured and arranged in respective slits 21a of the wheel 21. When each gas filter (22, 23) is housed in a corresponding slit 21a of the gas correlation filter wheel 20, the housing method is not particularly limited, but it can be housed using a fixing O-ring 27, a housing wheel cover, a fixing tool such as a screw, and the like. Specifically, the O-ring 27 is arranged at the bottom of each slit 21a of the wheel 21, and each gas filter is arranged in a corresponding slit 21a. At this time, the optical filter may be integrated with the gas filter, or the optical filter 223 may be arranged on the light transmitting window 222a in the light incident direction when the gas filter is housed, and either of these can be suitably applied. By holding each gas filter between the upper and lower O-rings 27 functioning as spring members, slight movements of each gas filter in the gas correlation filter wheel 20 can be prevented. Thus, even when the gas correlation filter wheel 20 rotates at a high speed, highly accurate analysis of a plurality of types of gas can be performed.

The optical filters 223 and 233 are attached to the gas filters 22 and 23, and transmit the infrared rays L of wavelength components absorbed by the target gas. As long as the optical filters 223 and 233 are optical filters capable of selectively transmitting the wavelengths of the infrared ray L that are same wavelengths as those absorbed by the target gas, they can be selected appropriately according to the purpose without any particular limitation, and for example, a bandpass filter, a cutoff filter, a cut-on filter, and the like are mentioned. One of these filters may be used alone, or two or more of them may be used together. Among these filters, a bandpass filter is preferable. The optical filters 223 and 233 are provided to narrow the wavelength of the infrared ray detected by the light receiving part 50 for the purpose of reducing the influence of interference by components other than the target gas. The optical filters 223 and 233 may be provided in a same direction as the light source 10 of the gas filters 22 and 23, or in the opposite direction of the light source 10.

The optical filters are installed for each target gas. More specifically, in the gas analyzer 1 according to the present embodiment, an optical filter 223A for transmitting the infrared ray L of a wavelength component absorbed by the target gas sealed in the target gas filter 22A is installed in the target gas filter 22A and the reference gas filter 23A. Then, an optical filter 223B for transmitting the infrared ray L of a wavelength component absorbed by the target gas sealed in the target gas filter 22B is installed in the target gas filter 22B and the reference gas filter 23B. Furthermore, an optical filter 223C for transmitting the infrared ray L of a wavelength component absorbed by the target gas sealed in the target gas filter 22C is attached to the target gas filter 22C and the reference gas filter 23C.

In the above example, the target gas filter 22A and the reference gas filter 23A, the target gas filter 22B and the reference gas filter 23B, and the target gas filter 22C and the reference gas filter 23C are arranged in pairs so as to be adjacent to each other. In this way, the reference gas and the target gas are detected alternately and the difference is acquired, so that the optical noise does not tend to be received. The gas filters 22 and 23 may be arranged so that the reference gas filter sealing the reference gas and the target gas filter sealing the target gas are not adjacent to each other.

The light shielding mask 24 is mounted outside the gas filters 22 and 23 so as to cover the gas filters 22 and 23 and the optical filters 223 and 233. An outside of the gas filters 22 and 23 may be on the opposite direction to the light source 10 of the gas filters 22 and 23 as shown in FIG. 4, but it is not limited to the above, and may be in a same direction as the light source 10 of the gas filters 22 and 23.

The light shielding mask 24 has a plurality of openings 241 in respective regions corresponding to the gas filters 22 and 23. The openings 241 are provided at positions to transmit the infrared rays L emitted from the light source 10. The light shielding mask 24 has the openings 241, so that the infrared rays L transmitted through the gas filters 22 and 23 repeatedly blink when viewed from the light receiving part 50. In the present embodiment, six openings 241 are provided in regions corresponding to the gas filters 22 and 23. Therefore, the light receiving part 50 receives the infrared rays L transmitted through the gas filters 22 and 23 six times per rotation of the gas correlation filter wheel 20.

The number of openings 241 may be approximately six, but this is not limited. The shape of the openings 241 may be circular, but various shapes may be adopted.

In order to detect the position of the gas filters and the type of the gas filters, for example, position detectors may be provided at positions corresponding to each gas filter around the gas correlation filter wheel 20, and an optical sensor for receiving the infrared rays L from the position detectors may be provided at positions opposite to the position detectors. The position detectors 25A to 25F detect the positions of the gas filters 22A to 23C, respectively, and are synchronized with the rotation of the gas correlation filter wheel 20. The position detectors 25A to 25F are provided at positions corresponding to the gas filters 22A to 23C, respectively. When the gas correlation filter wheel 20 is rotated by the rotating unit 30, the position detectors 25A to 25F transmit signals detected by the optical sensor 26 and synchronized with the positions of the gas filters 22A to 23C to the optical sensor 26.

The method for detecting the positions of the gas filters 22 and 23 by the position detector 25 is not limited to this method, and various methods for generating position information corresponding to the positions of the gas filters 22 and 23 as electric signals can be adopted. For example, instead of the optical sensor 26, the signal may be transmitted based on magnetism generated by the position detectors 25A to 25F by a magnetic detecting element such as a Hall element. In this case, the position detectors 25A to 25F are formed of magnets that emit different magnetism for each of the gas filters 22A to 23C. The signal acquired by the optical sensor 26 is input to the signal processor 60 as a synchronization signal, and can be integrated with the input signal of the light receiving part 50.

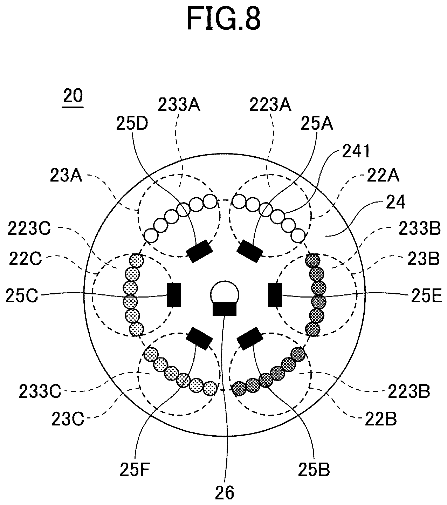

FIG. 8 is a plan view illustrating a modification of the gas correlation filter wheel 20 of the gas analyzer 1 according to the present embodiment. The position detectors 25A to 25F detect the positions of a plurality of gas filters 22A to 23C in synchronization with the rotation of the gas correlation filter wheel 20.

In the modification of the gas correlation filter wheel 20 shown in FIG. 8, unlike in FIGS. 3 and 4, the position detectors 25A to 25F are provided on the rotational axis side of each gas filter 22A to 23C. The optical sensor 26 is provided on the inner peripheral side of the gas correlation filter wheel 20. As in FIGS. 3 and 4, when the gas correlation filter wheel 20 is rotated by the rotating unit 30, the position detectors 25A to 25F are detected by the optical sensors 26 and transmit signals synchronized with the positions of each gas filter 22A to 23C to the optical sensor 26.

The rotating unit 30 has a rotating shaft attached to the rotary bearing 21b of the wheel 21 and a motor for rotating the rotating shaft. The rotating unit 30 rotates the gas correlation filter wheel 20 at a selected rotational speed. The gas correlation filter wheel 20 is arranged so that the infrared ray L irradiated by the light source 10 passes through a pair of light transmitting windows (e.g., 222a, 222b) of each gas filter, and when the gas correlation filter wheel 20 is rotated, each gas filter is sequentially inserted into the optical path of the infrared ray L irradiated by the light source 10.

For the rotating unit 30, for example, it is preferable to use an AC (Alternating Current) motor from a viewpoint of reducing inverter noise, and it is more preferable to use an AC synchronous motor. The rotating unit 30 is not limited to these motors, but a general motor can be used. The gas correlation filter wheel 20 may be rotated clockwise or counterclockwise by driving the rotating unit 30. In the present embodiment, the motor included in the rotating unit 30 can rotate the gas correlation filter wheel 20 at, for example, 1500 rpm.

The gas containing the target gas flows through the sample gas cell 40. The infrared rays L transmitted through the gas filters 22 and 23 and the optical filters 223 and 233 enter the sample gas cell 40. The infrared rays L passing through the sample gas cell 40 enter the light receiving part 50.

The sample gas cell 40 has a sample gas introduction part 41 into which the sample gas G is introduced, a sample gas exiting part 42 from which the sample gas G exits, a body section of the sample gas cell capable of circulating the introduced sample gas G, and a mirror 43. The sample gas introduction part 41 and the sample gas exiting part 42 may be connected to a pipe through which the sample gas G flows or may be connected to an environment to be measured so that the sample gas G flows through the sample gas cell 40, or the sample gas G may be filled into the sample gas cell 40 to detect the concentration of the target gas or the presence or absence of the target gas in a batch manner, and either case can be suitably applied.

The sample gas cell 40 communicates with the sample gas introduction part 41 and has a tubular shape in which the sample gas G is introduced into the sample gas cell 40. The inside (measurement space) of the sample gas cell 40 may be, for example, a closed space defined by the inner wall of the tubular part of the sample gas cell 40 and the inner wall sealing the end of the tubular part, or may be a closed space defined by the inner wall of the tubular part of the sample gas cell 40, the light transmitting window of the gas correlation filter wheel 20, the light transmitting window of the light receiving part 50, and the inner wall of the mirror 43. The inner wall of the sample gas cell 40 may be, for example, an inner surface made of polished stainless steel. Thus, the gas analyzer 1 can suppress adsorption of particulate matter (PM) or the like contained in the sample gas G. The sample gas exiting part 42 communicates with the sample gas cell 40 and derives the sample gas G from the inside of the sample gas cell 40.

As shown in FIG. 1, the infrared ray L irradiated by the light source 10 passes through a pair of light transmitting windows of one gas filter 22 arranged on the optical path, and then passes through the sample gas cell 40 and is received by the light receiving part 50. Specifically, the infrared ray L transmitted through the pair of light transmitting windows of the gas filter 22 is multiply reflected by a group of mirrors 43 in the sample gas cell 40 and passes through the sample gas G in the sample gas cell 40. When the infrared ray L passes through the sample gas G in the sample gas cell 40, it is absorbed by the target gas contained in the sample gas G. Then, the remaining light that is not absorbed, that is, the transmitted light, enters the light receiving part 50, and the quantity of light is detected. Since the intensity of the light reaching the light receiving part 50 varies according to the gas concentration of the target gas contained in the sample gas G, the concentration of the target gas can be calculated from the quantity of light detected by the light receiving part 50.

The sample gas cell 40 is provided with a center mirror 43c and a plurality of reflection mirrors 43a, 43b, 43d, and 43e for multiply-reflecting the incident infrared ray L. The infrared ray L incident on the sample gas cell 40 is reflected in an order of the reflection mirror 43a, the reflection mirror 43b, the center mirror 43c, the reflection mirror 43d, and the reflection mirror 43e, and is received by the light receiving part 50. Note that only a part of the surface of the mirror 43 may be a mirror surface, and all surfaces may be mirror surfaces.

The center mirror 43c is disposed facing the reflection mirrors 43b and 43d. Being disposed facing the reflection mirrors may mean that the mirror surface of the center mirror 43c is disposed facing the mirror surfaces of the reflection mirrors 43b and 43d. The facing arrangement may mean that at least a part of the mirror surface of the center mirror 43c and at least a part of the mirror surfaces of the reflection mirrors 43b and 43d face each other. Only a part of the center mirror 43c may be a mirror surface, and all of the surfaces may be mirror surfaces.

The reflection mirror 43b is arranged facing the center mirror 43c. The mirror surface of the reflection mirror 43b may be arranged facing the mirror surface of the center mirror 43c. Only a part of the reflection mirror 43b may be a mirror surface, and all of the surfaces may be mirror surfaces.

The reflection mirror 43d is arranged facing the center mirror 43c. The mirror surface of the reflection mirror 43d may be arranged facing the mirror surface of the center mirror 43c. Only a part of the reflection mirror 43d may be a mirror surface, and all of the surfaces may be mirror surfaces.

The center mirror 43c, the reflection mirror 43b, and the reflection mirror 43d may be concave mirrors, respectively. That is, the center mirror 43c, the reflection mirror 43b, and the reflection mirror 43d each have a radius of curvature. The center mirror 43c, the reflection mirror 43b, and the reflection mirror 43d may have the same radius of curvature. The radius of curvature of the mirror may be the radius of curvature of the mirror surface.

Since the center mirror 43c, the reflection mirror 43b, and the reflection mirror 43d have the same radius of curvature, the incident infrared ray L can be multi-reflected. That is, the sample gas cell 40 may be a white cell. By using the white cell, the optical path length of the infrared ray L incident on the sample gas cell 40 can be increased, and the concentration can be accurately measured even if a target component contained in the sample gas is small.

The mirror 43 has a high reflectivity at the center wavelength $\lambda$ and the band width (FWHM) of the infrared ray L irradiated by the light source 10, and multi-reflects laser beams so as to be approximately parallel. In place of the reflection mirror, for example, a prism or a corner cube that performs a plurality of orthogonal reflections, a mirror assembly composed of two mirrors at right angles to each other, or a reflective optical component such as a glass sphere whose reflective surface is deposited on a hemispherical substrate may be used.

The light receiving part 50 receives the infrared ray L irradiated by the light source 10 and passed through the sample gas G, and outputs a detection signal corresponding to the light received. The light receiving part 50 may be arranged to face the light source 10 as shown in FIG. 1, or may be arranged alongside the light source 10 as another embodiment.

The light receiving part 50 includes a light receiving element. A PbSe element having high sensitivity in a mid-infrared region may be used as the light receiving element, but various elements having sensitivity in the mid-infrared region may be used.

The infrared rays L transmitted through the gas filters 22 and 23, the optical filters 223 and 233, and the sample gas cell 40 and received by the light receiving element of the light receiving part 50 are converted into electric signals and input to the signal processor 60. The light receiving part 50 may include a temperature detecting element such as a thermistor and a Peltier element as a cooling unit.

The signal processor 60 calculates the concentration of the target gas based on the electric signal input from the light receiving part 50. The signal processor 60 can measure the concentration of the target gas by acquiring the intensity variation of the infrared ray L at the wavelengths absorbed by the target gas.

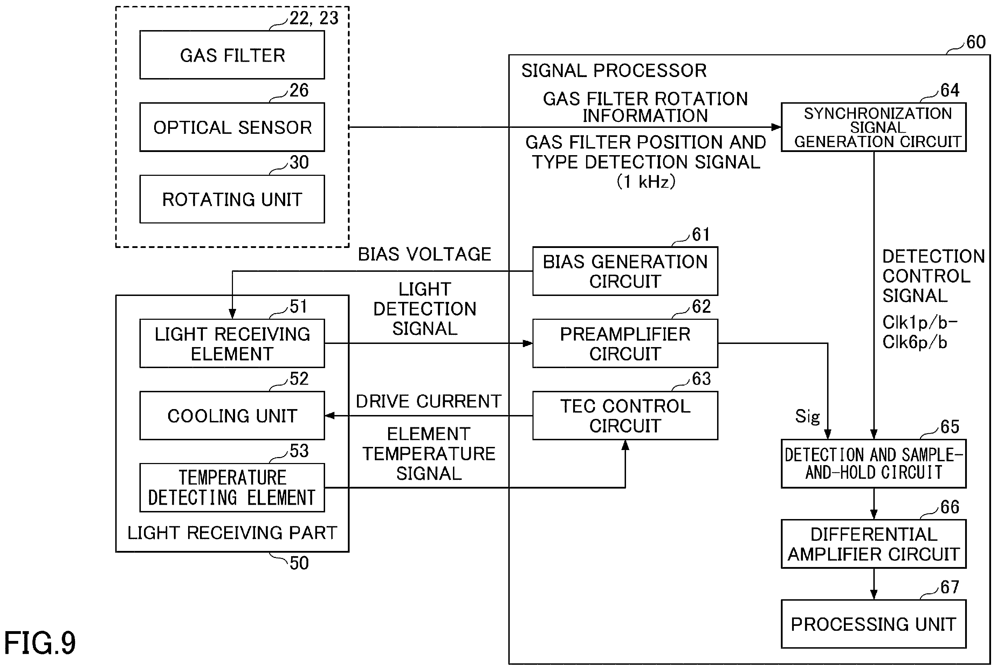

The configuration of the signal processor 60 will be described below with reference to FIG. 9. FIG. 9 is a configuration diagram of the signal processor 60 of the gas analyzer 1 according to the present embodiment. The signal processor 60 includes a bias generation circuit 61, a preamplifier circuit 62, a TEC (Thermoelectric Cooler) control circuit 63, a synchronization signal generation circuit 64, a detection and sample-and-hold circuit 65, a differential amplifier circuit 66, and a processor 67.

The bias generation circuit 61 applies a bias voltage to the light receiving element 51. When the light receiving element 51 receives the infrared ray L transmitted through the sample gas cell 40, the light receiving element 51 generates a photocurrent generated by the applied bias voltage as a light detection signal Sig. The light detection signal Sig is an electric signal. The preamplifier circuit 62 amplifies the light detection signal Sig from the light receiving element 51 and inputs it to the detection and sample-and-hold circuit 65.

The TEC control circuit 63 receives an element temperature signal, which varies according to the temperature of the light receiving part 50 from the temperature detection element 53 and controls a drive current supplied to the cooling unit 52. The TEC control circuit 63 supplies the drive current to the cooling unit 52 so as to be driven as a cooler when the temperature of the light receiving element 51 is higher than a standard based on a predetermined temperature.

The cooling target of the cooling unit 52 is the light receiving element 51 included in the light receiving part 50. It is preferable that the temperature of the light receiving element 51 is appropriately controlled by the cooling unit 52, since a failure such as a decrease in output may occur due to a temperature variation. The cooling unit 52 may be, for example, a Peltier element.

The synchronization signal generation circuit 64 generates synchronization signals Clk1p/b to Clk6p/b indicating the positions of the gas filters 22A to 23C based on signals received from the optical sensor 26 and synchronized with the rotation of the gas correlation filter wheel 20. The synchronization signal generation circuit 64 may generate synchronization signals Clk1p/b to Clk6p/b with respect to Clk1 to Clk6 based on a modulation signal having a frequency such as 1 kHz, for example. The synchronization signals Clk1p/b to Clk6p/b are used to synchronize the positions of the detected gas filters 22A to 23C and the time information of the infrared rays L transmitted through the gas filters 22A to 23C.

The synchronization signals Clk1p/b to Clk6p/b generated by the synchronization signal generation circuit 64 are used to detect the peak and the bottom of the light detection signal Sig for each of the gas filters 22 and 23. The peak of the light detection signal Sig is the signal value when the light receiving part 50 receives the infrared ray L transmitted through the opening 241 of the light shielding mask 24 and the sample gas cell 40. The bottom of the light detection signal Sig is the signal value when the infrared ray L does not pass through the opening 241 of the light shielding mask 24.

The synchronization signal generation circuit 64 generates synchronization signals Clk1p to Clk6p synchronized with the peak of the light detection signal Sig transmitted through the gas filter 23A and synchronization signals Clk1b to Clk6b synchronized with the bottom of the light detection signal Sig. The generated synchronization signals Clk1p/b to Clk6p/b are input to the detection and sample-and-hold circuit 65 as detection control signals for each reference gas and target gas.

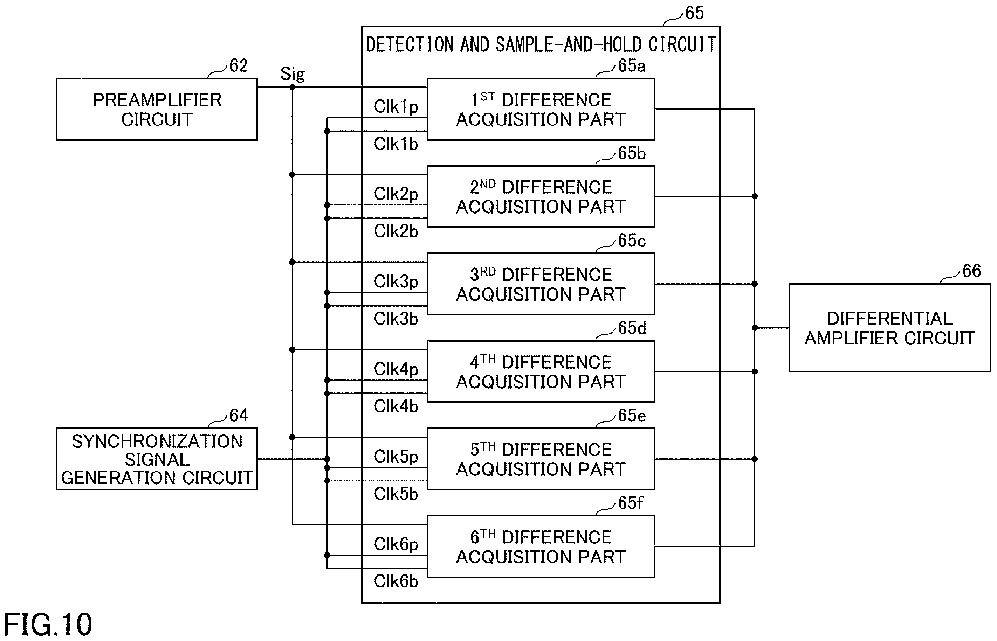

FIG. 10 is a drawing illustrating a schematic configuration of a detection and sample-and-hold circuit 65 of the gas analyzer 1 according to the present embodiment. As shown, the detection and sample-and-hold circuit 65 includes a first difference acquisition part 65a, a second difference acquisition part 65b, a third difference acquisition part 65c, a fourth difference acquisition part 65d, a fifth difference acquisition part 65e, and a sixth difference acquisition part 65f.

The first difference acquisition part 65a receives the light detection signal Sig from the preamplifier circuit 62, receives the synchronization signals Clk1p and Clk1b from the synchronization signal generation circuit 64, and smooths the peak p1 and the bottom b1 of the light detection signal Sig, respectively. Then, the first difference acquisition part 65a acquires the difference between the peak p1 and the bottom b1 of the light detection signal Sig, and transmits it to the differential amplifier circuit 66.

Like the first difference acquisition part 65a, the second difference acquisition part 65b receives the synchronization signals Clk2p and Clk2b, acquires the difference between the peak p2 and the bottom b2 of the light detection signal Sig, and transmits it to the differential amplifier circuit 66. The third difference acquisition part 65c receives the synchronization signals Clk3p and Clk3b, acquires the difference between the peak p3 and the bottom b3 of the light detection signal Sig, and transmits it to the differential amplifier circuit 66.

The fourth difference acquisition part 65d receives the synchronization signals Clk4p and Clk4b, acquires the difference between the peak p4 and the bottom b4 of the light detection signal Sig, and transmits it to the differential amplifier circuit 66. The fifth difference acquisition part 65e receives the synchronization signals Clk5p and Clk5b, acquires the difference between the peak p5 and the bottom b5 of the light detection signal Sig, and transmits it to the differential amplifier circuit 66. The sixth difference acquisition part 65f receives the synchronization signals Clk6p and Clk6b, acquires the difference between the peak p6 and the bottom b6 of the light detection signal Sig, and transmits the difference to the differential amplifier circuit 66.

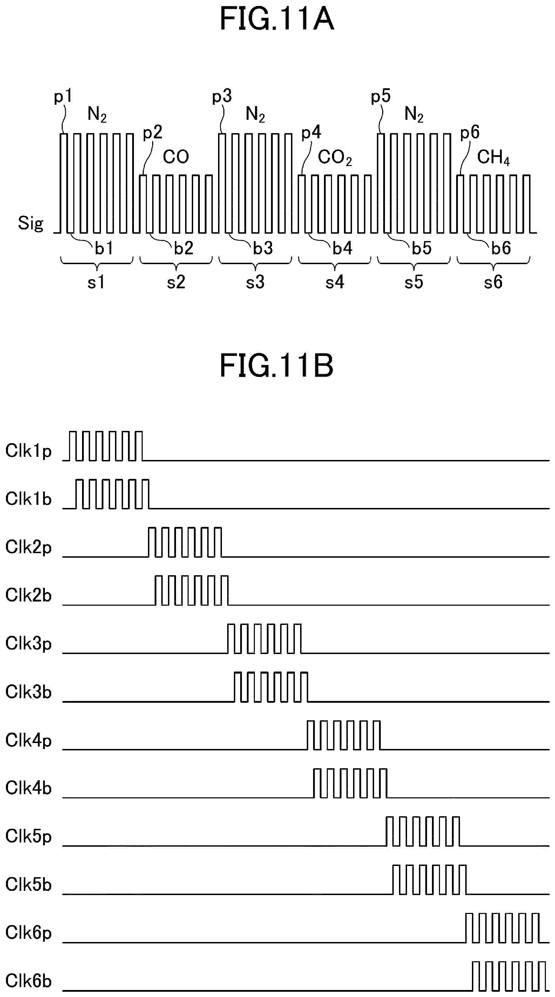

FIGS. 11A and 11B are drawings illustrating an example of a light detection signal Sig in the gas analyzer 1 according to the present embodiment. FIG. 11A shows an example of the waveform of the light detection signal Sig, and FIG. 11B shows an example of the waveform of the synchronization signals Clk1p/b to Clk6p/b generated by the synchronization signal generation circuit 64. The light detection signal Sig is processed so as to be synchronized with the synchronization signals Clk1p/b to Clk6p/b, respectively.

In FIG. 11A, p1 to p6 refer to the peak of the light detection signal Sig, and b1 to b6 refer to the bottom of the light detection signal Sig. The peak p1 and the bottom b1 are the peak p1 and the bottom b1 of the light detection signal Sig to the reference gas filter 23A. Similarly, each of the peak values p2 to p6 and the bottom values b2 to b6 corresponds to one of the signals for respective gas filters 22A, 23B, 22B, 23C, and 22C. More specifically, the peak value p2 and the bottom value b2 are associated with the target gas filter 22A; p3 and b3 with the reference gas filter 23B; p4 and b4 with the target gas filter 22B; p5 and b5 with the reference gas filter 23C; and p6 and b6 with the target gas filter 22C.

As shown in FIG. 11A, the light detection signal Sig is a rectangular wave. The light detection signal Sig has peaks p1 to p6 when the light receiving part 50 receives the infrared ray L that has passed through the opening 241 of the light shielding mask 24 and the sample gas cell 40. The light detection signal Sig has bottoms b1 to b6 when the infrared ray L does not pass through the opening 241 of the light shielding mask 24.

When the light shielding mask 24 including the opening 241 is not provided, since the peak p1 and the bottom b1 for each target gas are acquired only once per rotation of the gas correlation filter wheel 20, it is difficult to acquire stable measurement results when smoothing processing is considered.

When the peak and the bottom of the light detection signal Sig are respectively n, the summation average of the noise components is $1/\sqrt{n}$, and therefore, the noise components decrease by the smoothing processing as the peak and the bottom of the light detection signal Sig increase. Therefore, as the number of the openings 241 increases, the error caused by the influence of optical noise such as the fluctuation of the quantity of light of the transmitted infrared ray L and the interference by moisture contained in the sample gas and gas not to be measured is reduced, and gas concentration measurement becomes more stabilized. Therefore, a light shielding mask 24 having a plurality of openings 241 transmitting the infrared ray L from the light source 10 is provided in each area corresponding to the gas filters 22 and 23.

From the viewpoint of acquiring more peaks and bottoms of the light detection signal Sig, it is preferable to have a large number of openings 241. However, it is desirable to determine the number of openings 241 by considering that when the number of openings 241 is extremely large, the quantity of light received by the light receiving part 50 decreases. For example, the number of openings 241 may be six as in the example of the present embodiment, but this is not limited.

The light detection signal Sig is the infrared ray L alternately received by the light receiving part 50 each time the gas correlation filter wheel 20 makes one rotation, passing through the gas filters 23A, 23B, and 23C, which are reference gas filters sealing the reference gases, or the gas filters 22A, 22B, and 22C, which are target gas filters sealing the target gases.

In the gas analyzer 1 according to the present embodiment, there are three types of target gas as described above, and six gas filters 22, 23 are housed in the gas correlation filter wheel 20. The light detection signal Sig has a rectangular waveform having peaks p1 to p6 and bottoms b1 to b6 corresponding to the number of openings 241 of the light shielding mask 24.

When the sample gas containing the target gas is allowed to flow into the sample gas cell 40, the light detection signal Sig of the infrared rays L that have passed through the reference gas filters 23, in which the reference gas is sealed, is attenuated according to light absorption in the sample gas cell 40. In addition, since the light components in the wavelength band absorbed by the target gas have already been attenuated by the reference gas filters 23, the amount of light absorption of the light detection signal Sig of the infrared ray L that has passed through the target gas filters 22, in which the target gas is sealed, in the sample gas cell 40 is small, and the amount of attenuation is also small.

The light detection signal Sig includes signal parts s1 to s6 for each infrared ray L that has passed through the gas filters 22A to 23C. The signal parts s1, s3, and s5 are light detection signals Sig of the infrared ray L that has passed through the gas filters 23A, 23B, and 23C in which the reference gas is sealed and has passed through the sample gas cell 40. The signal parts s2, s4, and s6 are light detection signals Sig of the infrared ray L that has passed through the gas filters 22A, 22B, and 22C in which the target gas is sealed and has passed through the sample gas cell 40.

The synchronization signal Clk1p is turned on when the infrared ray L passes through the opening 241 of the light shielding mask 24 covering the gas filter 23A, and the peak p1 of the light detection signal Sig can be acquired. The synchronization signal Clk1b is turned on when the infrared ray L does not pass through the opening 241 of the light shielding mask 24 covering the gas filter 23A, and the bottom b1 of the light detection signal Sig can be acquired. The same applies to the synchronization signals 2p/b to 6p/b.

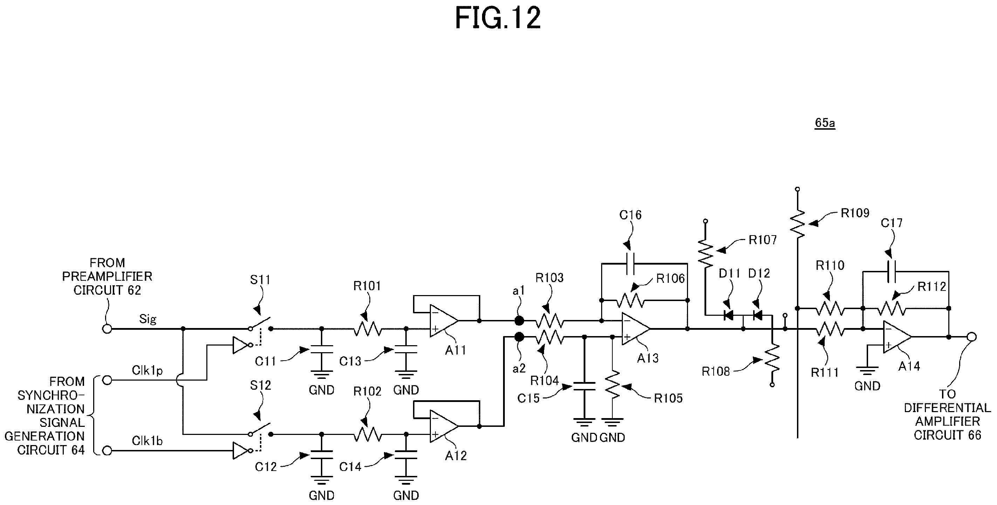

FIG. 12 is a drawing illustrating an example of a circuit configuration of a detection and sample-and-hold circuit 65 in the gas analyzer 1 according to the present embodiment. The shown illustrated circuit refers to the first difference acquisition part 65a of the detection and sample-and-hold circuit 65. Since the second difference acquisition part 65b, the third difference acquisition part 65c, the fourth difference acquisition part 65d, the fifth difference acquisition part 65e, and the sixth difference acquisition part 65f have the same configuration as the first difference acquisition part 65a, their description is omitted.

FIG. 12 is a circuit for acquiring differences between the peak p1 and the bottom b1 of the light detection signal Sig by means of the light detection signal Sig of the infrared ray L transmitted through the gas filter 23A and the synchronization signals Clk1p and Clk1b in the detection and sample-and-hold circuit 65.

In the switch S11, the peak signal of the light detection signal Sig is selected when the ON signal of the synchronization signal Clk1p is received, and in the switch S12, the bottom signal of the light detection signal Sig is selected when the ON signal of the synchronization signal Clk1b is received.

High-frequency components of the light detection signal Sig are removed and smoothed by a low-pass filter including a resistor R101 and a capacitor C11. Then, the peak signal intensity of the light detection signal Sig is corrected by a buffer circuit including an operational amplifier A11, and a time lag of the light detection signal Sig is corrected. At this time, the peak p1 of the light detection signal Sig is acquired at a1 in the figure.

The high-frequency component of the light detection signal Sig is removed and smoothed by a low-pass filter including a resistor R102 and a capacitor C12. Then, the signal intensity at the bottom side of the light detection signal Sig is corrected by a buffer circuit composed of an operational amplifier A12, and the time lag of the light detection signal Sig is corrected. At this time, the bottom b1 of the light detection signal is acquired at a2 in the figure.

The difference between the peak p1 of the light detection signal Sig input from the switch S11 side and the bottom b1 of the light detection signal Sig input from the switch S12 side is acquired and amplified by a differential amplification unit composed of resistors R103 to R106, capacitors C15 and C16, and an operational amplifier A13.

Moreover, the current clamp circuit composed of resistors R107 and R108 and diodes D11 and D12 prevents surge voltage and overcurrent from flowing into the detection and sample-and-hold circuit 65.

Then, a level shift circuit including resistors R109 to R112, a capacitor C17, and an operational amplifier A14 adjusts the signal value of the light detection signal Sig so as not to include a negative value. In the level shift circuit, the difference between the peak p1 and the bottom b1 of the light detection signal Sig acquired in the differential amplifier section is smoothed. The difference between the peak p1 and the bottom b1 of the light detection signal Sig is output to the differential amplifier circuit 66 and amplified.

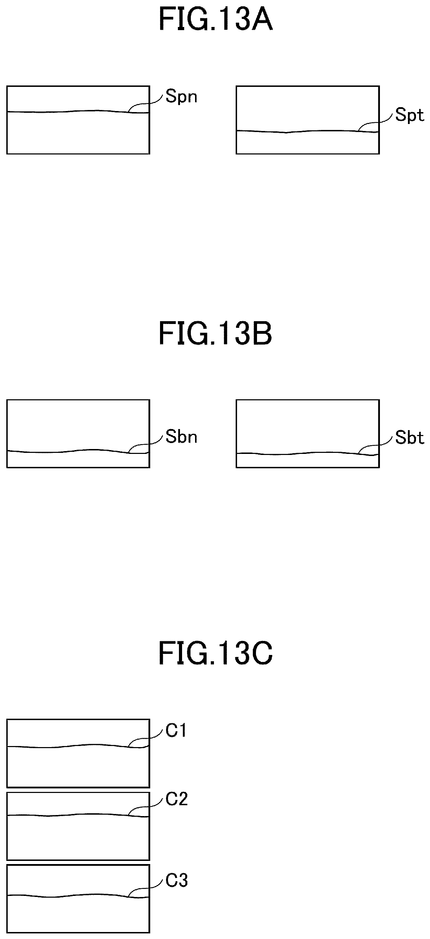

FIGS. 13A to 13C are drawings illustrating an example of a result of processing the light detection signal Sig in the gas analyzer 1 according to the present embodiment. FIGS. 13A and 13B show the peak and the bottom of each signal in the reference gas and the target gas, respectively, and FIG. 13C shows an indicated gas concentration of each target gas. In the illustrated example, the reference gas is $N_2$, and the target gases are CO, $CO_2$, and $CH_4$. In FIG. 13C, C1, C2, and C3 refer to indicated gas concentrations of target gases CO, $CO_2$, and $CH_4$, respectively.

In order to detect $CO_2$, CO, and $CH_4$, an optical filter capable of selectively transmitting, for example, a wavelength range of about 100 nm centering on a wavelength of 4260 nm as the wavelength absorbed by $CO_2$, an optical filter capable of selectively transmitting, for example, a wavelength range of about 100 nm centering on a wavelength of 4670 nm as the wavelength absorbed by CO, an optical filter capable of selectively transmitting, for example, a wavelength range of about 100 nm centering on a wavelength of 3110 nm as the wavelength absorbed by $CH_4$, and a light source emitting infrared ray L containing these wavelengths absorbed by the gases can be used as a light source.

In FIG. 13A, Spn refers to a peak of the signal of the reference gas and is acquired at a point corresponding to a1 of the circuit of the first difference acquisition part 65a shown in FIG. 7, or at a point corresponding to a1 of FIG. 7 in the third difference acquisition part 65c, and the fifth difference acquisition part 65e. Spt also refers to a peak of the signal of each target gas and is acquired at a point corresponding to a1 of FIG. 12 in the second difference acquisition part 65b, the fourth difference acquisition part 65d, and the sixth difference acquisition part 65f.

In FIG. 13B, Sbn refers to a bottom of the signal of the reference gas and is acquired at a point corresponding to a2 of the circuit of the first difference acquisition part 65a shown in FIG. 7, or at a point corresponding to a2 of FIG. 7 in the third difference acquisition part 65c, and the fifth difference acquisition part 65e. Sbt refers to a bottom of the signal of each target gas and is acquired at a point corresponding to a2 of FIG. 12 in the second difference acquisition part 65b, the fourth difference acquisition part 65d, and the sixth difference acquisition part 65f.

The processor 67 calculates an indicated gas concentration for each of the plurality of target gases as shown in FIG. 11B based on the peak and the bottom of the rectangular wave signal for each of the reference gas and the target gas.

Each optical filter is introduced into a corresponding gas correlation filter set of the gas correlation filter wheel of the present embodiment. According to the rotation of the motor, the light emitted from both the gas filter in which the reference gas is sealed and the gas filter in which the target gas is sealed is used.

The infrared ray L passing through the gas correlation filter wheel is introduced into the sample gas cell. In order to ensure the sensitivity, a multiple reflection cell can be used.

As the light receiving element, a light receiving element that is sensitive to any of the infrared rays L at the wavelength of approximately 4260 nm, approximately 4670 nm, and approximately 3110 nm can be used. For example, a PbSe element can be used.

In the gas filter correlation system, for the light transmitted through the cell in which the reference gas is sealed, much of the light is absorbed by the sample gas in the sample gas cell. Conversely, for the light transmitted through the cell in which the target gas is sealed, much of the light has been already absorbed by the cell in which the target gas is sealed when it reaches the sample gas cell. Therefore, the absorbance of the sample gas cell decreases.

By comparing and calculating these two lights, the noise common to both lights can be removed and the gas concentration can be calculated.

More specifically, if the difference between the peak and the bottom of the signal of the reference gas is $V_{N2}$, the difference between the peak and the bottom of the signal of the target gas is $V_{Target}$, and the target gas concentration is the indicated gas concentration, the following equation 1 is satisfied. The processor 67 calculates the indicated gas concentration using equation 1. The waveform shown in FIG. 13C is generated in the processor 67 as a result of the equation 1.

[Equation 1]

$$\text{Target Gas Concentration} \propto \frac{V_{N_2} - V_{Target}}{V_{Target}} \quad \dots \quad (1)$$

<EFFECT>

In the gas correlation filter wheel 20 of the gas analyzer 1 according to the present embodiment, the plurality of pairs of the target gas filter 22 sealed with the target gas and the reference gas filter 23 sealed with the reference gas are formed and housed. Therefore, a plurality of gas components contained in a sample gas can be measured.

The light shielding mask 24 attached to the gas filters 22 and 23 has a plurality of openings 241 in respective regions corresponding to the gas filters 22 and 23. Therefore, the peak and the bottom of the light detection signal Sig to be acquired increase, and the error caused by the influence of optical noise such as the fluctuation of the quantity of light of the infrared ray L received by the light receiving part 50 and the interference by moisture contained in the sample gas and gas not to be measured is reduced.

Then, the detection and sample-and-hold circuit 65 smooths the peaks p1 to p6 and the bottoms b1 to b6 of the light detection signal Sig and acquires the difference, and the differential amplifier circuit 66 amplifies the difference. Then, the processor 67 smooths the peaks p1 to p6 and the bottoms b1 to b6 of the light detection signal Sig and calculates the indicated gas concentration of the plurality of target gases based on the difference.

Therefore, according to the gas analyzer 1 according to the present embodiment, gas analysis can be performed stably for the plurality of target gases.

The gas analyzer 1 of the present disclosure is suitable for use in facilities that require zero detection of a plurality of components of toxic gases such as carbon dioxide, carbon monoxide, and methane. In addition, it is also useful as an analyzer for use in confined spaces such as ships, measurement of combustion exhaust gas from boilers and garbage incineration, gas analysis for steel production (blast furnace, converter, heat treatment furnace, sintering (pellet facility), coke oven), gas analysis for fruit and vegetable storage and ripening, gas analysis in a field of biochemistry (microorganisms, fermentation), measurement of air pollution gas (incinerator, flue gas desulfurization and denitration), measurement of exhaust gas from internal combustion engines (exhaust gas tester), gas analysis for disaster prevention (explosive gas detection, toxic gas detection, combustion gas analysis of new building materials), gas analysis for plant growth, chemical analysis (petroleum refining plants, petrochemical plants, and gas generating plants), measurement of environmental gas (ground concentration, in-tunnel concentration, parking, building management), and various science and chemistry experiments.

Further, the present invention is not limited to these embodiments, and various variations and modifications may be made without departing from the scope of the present invention.

EXPLANATION OF REFERENCE NUMERALS

1 gas analyzer
10 light source
20 gas correlation filter wheel
21 wheel
21a slit
21b rotary bearing
22 target gas filter
221 housing
222 light transmitting window
223 optical filter
224 adhesive
225 inlet hole
226 pipe
23 reference gas filter
233 optical filter
24 light shielding mask
241 opening
25 position detector
26 optical sensor
27 O-ring
30 rotating unit
40 sample gas cell
41 sample gas introduction part
42 sample gas exiting part
43 multiple reflection part
43c center mirror
43a, 43b, 43d, 43e reflection mirror
50 light receiving part
51 light receiving element
52 cooling unit
60 signal processor
61 bias generation circuit
62 preamplifier circuit
63 TEC control circuit
64 synchronization signal generation circuit
65 detection and sample-and-hold circuit
66 differential amplification circuit
67 processor
C1, C2, C3 indicated gas concentration
S switch
R resistance
C capacitor
A amplifier
D diode
G sample gas
L infrared ray

**Claims**

1.  A gas analyzer for measuring a concentration of a plurality of target gases included in a sample gas, comprising:

    a light source configured to emit an infrared ray;
    a plurality of gas filters including a plurality of target gas filters, each sealed with a different one of the target gases that absorbs the infrared ray, and one or more reference gas filters sealed with a reference gas that transmits the infrared ray and does not absorb the infrared ray;
    a light shielding mask provided outside the gas filters, including a plurality of regions, each of the regions corresponding to a respective one of the plurality of gas filters, and each of the regions having a plurality of openings configured to transmit the infrared ray;

a gas correlation filter wheel rotatably provided and configured to house the plurality of target gas filters and the one or more reference gas filters; and

a sample gas cell configured to receive the infrared ray transmitted through one of the gas filters including the target gas filters and the one or more reference gas filters, and configured to have the sample gas including the target gases inside.

2. The gas analyzer according to claim 1, wherein the plurality of target gas filters and the one or more reference gas filters housed in the gas correlation filter wheel form a plurality of gas-filter pairs, each of the gas-filter pairs including one of the target gas filters and one of the one or more reference gas filters.

3. The gas analyzer according to claim 1 or 2, further comprising:

a light receiving part configured to receive the infrared ray transmitted through the sample gas cell, and to convert the infrared ray into a light detection signal; and

a signal processor configured to calculate the concentration of each of the plurality of target gases contained in the sample gas based on the light detection signal.

4. The gas analyzer according to claim 3, wherein the light detection signal has a rectangular wave shape, and the signal processor includes a detection and sample-and-hold circuit configured to acquire a difference between a peak and a bottom of the light detection signal.

5. The gas analyzer according to claim 3 or 4, wherein the signal processor is configured to calculate an indicated gas concentration for each of the plurality of the target gases contained in the sample gas based on a difference between a peak and a bottom of the light detection signal.

6. The gas analyzer according to one of the preceding claims, further comprising a plurality of optical filters, wherein each of the plurality of optical filters is attached to a corresponding one of the target gas filters, and is configured to selectively transmit wavelengths of the infrared ray that are same wavelengths as those absorbed by the corresponding one of the target gases.

7. The gas analyzer according to any one of the preceding claims, further comprising a position detector configured to detect positions of a plurality of gas-filter pairs and synchronized with a rotation of the gas correlation filter wheel, each of the gas-filter pairs including one of the target gas filters and one of the one or more reference gas filters.

8. The gas analyzer according to one of the preceding claims, wherein each of the gas filters further includes:

a housing that is tubular;

an inlet hole provided on a lateral surface of the housing, and configured to introduce a gas into the housing; and

a pipe capable of being pressure-bonded or adhesively sealed to the inlet hole.

9. A gas correlation filter wheel for a gas analyzer of a gas correlation system, especially for a gas analyzer according to one of the preceding claims, comprising:

a plurality of gas filters; and

a wheel configured to house the plurality of gas filters along a circumference of a circle concentric with the wheel, wherein:

each of the gas filters includes a housing that is tubular, light transmitting windows sealing both ends of the housing, and an optical filter positioned on one of the light transmitting windows; and

the plurality of gas filters include at least a first gas correlation filter set and a second gas correlation filter set, the first gas correlation filter set including:

a first target gas filter, in which a first target gas is sealed; and

a first reference gas filter sealed with a reference gas that does not absorb an infrared ray, the optical filter of the first target gas filter and the optical filter of the first reference gas filter being configured to selectively transmit wavelengths of the infrared ray that are same as those absorbed by the first target gas, and

the second gas correlation filter set including:

a second target gas filter in which a second target gas is sealed; and
a second reference gas filter sealed with the reference gas that does not absorb the infrared ray,
the optical filter of the second target gas filter and the optical filter of the second reference gas filter being
configured to selectively transmit wavelengths of the infrared ray that are same as those absorbed by the
second target gas.

**10.** The gas correlation filter wheel according to claim 9, wherein each of the gas filters further includes:

an inlet hole provided on a lateral surface of the housing, and configured to introduce a gas into the housing; and
a pipe capable of being pressure-bonded or adhesively sealed to the inlet hole.

# FIG.1

EP 4 703 710 A1

# FIG.2

21a

21

21b

# FIG.3

# FIG.4

# FIG.5

# FIG.6

# FIG.7

# FIG.8

**FIG.9**

FIG.10

EP 4 703 710 A1

# FIG.11A

# FIG.11B

# FIG.12

65a

FROM PREAMPLIFIER CIRCUIT 62 — Sig

FROM SYNCHRONIZATION SIGNAL GENERATION CIRCUIT 64 — Clk1p, Clk1b

S11, S12, C11, C12, C13, C14, R101, R102, A11, A12, a1, a2, R103, R104, C15, GND, GND, A13, R105, R106, C16, R107, D11, D12, R108, R109, R110, R111, C17, R112, A14, GND

TO DIFFERENTIAL AMPLIFIER CIRCUIT 66

# FIG.13A

Spn

Spt

# FIG.13B

Sbn

Sbt

# FIG.13C

C1

C2

C3

**EUROPEAN SEARCH REPORT**

Application Number

EP 25 19 1913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2023 0030741 A (KNTECH INC [KR]) 7 March 2023 (2023-03-07) | 1-6,9 | INV. G01N21/3518 |
| Y | * figures 2-4, 6 and the corresponding description * | 7,8,10 | G01J3/42 |
| | ----- | | ADD. |
| Y | JP 2007 199032 A (RIKEN KEIKI KK) 9 August 2007 (2007-08-09) * figures 4-8 * * paragraphs [0022] - [0030] * | 1-8,10 | G01N21/03 G01N21/31 |
| | ----- | | |
| X | US 3 904 880 A (BENZ DONALD E ET AL) 9 September 1975 (1975-09-09) | 9 | |
| Y | * figures 1-4, 4a * * column 4, line 8 - column 10, line 10 * | 1-8,10 | |
| | ----- | | |
| X | KR 2023 0095781 A (KNTECH INC [KR]) 29 June 2023 (2023-06-29) | 9 | |
| Y | * figures 2-4 and the corresponding description * | 1-8,10 | |
| | ----- | | |
| A | JP 7 439974 B1 (FUJI ELECTRIC CO LTD) 28 February 2024 (2024-02-28) * figures 1, 2 * * paragraphs [0008] - [0029] * | 1-10 | TECHNICAL FIELDS SEARCHED (IPC)<br><br>G01N |
| | ----- | | |

The present search report has been drawn up for all claims

| Place of search | Date of completion of the search | Examiner |
|---|---|---|
| Munich | 20 November 2025 | Sauerer, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 1913

This annex lists the patent family members relating to the patent documents cited in  the above-mentioned European search report.
The members are as contained in the European Patent Office EDP file on
The European Patent Office is in no way liable for these particulars which are merely given for the purpose of information.

20-11-2025

| Patent document cited in search report | | Publication date | Patent family member(s) | | Publication date |
|---|---|---|---|---|---|
| KR 20230030741 | A | 07-03-2023 | NONE | | |
| JP 2007199032 | A | 09-08-2007 | JP | 4700506 B2 | 15-06-2011 |
| | | | JP | 2007199032 A | 09-08-2007 |
| US 3904880 | A | 09-09-1975 | FR | 2229060 A1 | 06-12-1974 |
| | | | IT | 1012269 B | 10-03-1977 |
| | | | JP | S5017274 A | 24-02-1975 |
| | | | JP | S5634814 B2 | 13-08-1981 |
| | | | US | 3904880 A | 09-09-1975 |
| KR 20230095781 | A | 29-06-2023 | KR | 102435342 B1 | 23-08-2022 |
| | | | KR | 20230095781 A | 29-06-2023 |
| JP 7439974 | B1 | 28-02-2024 | EP | 4563976 A1 | 04-06-2025 |
| | | | JP | 7439974 B1 | 28-02-2024 |
| | | | JP | 2024123830 A | 12-09-2024 |
| | | | WO | 2024181535 A1 | 06-09-2024 |

EPO FORM P0459

For more details about this annex : see Official Journal of the European Patent Office, No. 12/82

**REFERENCES CITED IN THE DESCRIPTION**

**Patent documents cited in the description**

- JP 2024147576 A
- JP 2024215931 A
- JP H8184562 A
- JP H1082740 A
- JP 55007178 A